Europäisches Patentamt

European Patent Office

Office européen des brevets

(19)

(11) Publication number: **0 032 189**
**B1**

(12) **EUROPEAN PATENT SPECIFICATION**

(45) Date of publication of patent specification: **30.04.86**

(21) Application number: **80107498.0**

(22) Date of filing: **01.12.80**

(51) Int. Cl.⁴: **C 08 G 63/14,** C 08 G 63/38, C 08 G 63/68

(54) **Preparation of unsaturated polyesters from dicarboxylic acids, dibromoneopentyl glycol and a catalyst.**

(30) Priority: **03.12.79 US 99259**
**03.12.79 US 99258**

(43) Date of publication of application:
**22.07.81 Bulletin 81/29**

(45) Publication of the grant of the patent:
**30.04.86 Bulletin 86/18**

(84) Designated Contracting States:
**BE DE FR GB IT NL**

(56) References cited:
**FR-A-2 378 066**
**GB-A- 968 910**
**US-A-3 285 995**
**US-A-3 536 782**
**US-A-4 029 848**

(73) Proprietor: **THE DOW CHEMICAL COMPANY**
**2030 Dow Center Abbott Road P.O. Box 1967**
**Midland, MI 48640 (US)**

(72) Inventor: **Larsen, Eric Russell**
**314 West Meadowbrook**
**Midland Michigan (US)**
Inventor: **Ecker, Ernest Leverne**
**346 Dopp Road**
**Midland Michigan (US)**
Inventor: **Miller, Dennis Paul**
**4504 Forestview Drive**
**Midland Michigan (US)**

(74) Representative: **Casalonga, Axel et al**
**BUREAU D.A. CASALONGA OFFICE JOSSE &**
**PETIT Baaderstrasse 12-14**
**D-8000 München 5 (DE)**

Courier Press, Leamington Spa, England.

## Description

This invention is concerned with unsaturated polyesters containing as essential component an effective amount of dibromoneopentyl glycol. The polyesters are easily prepared are of relatively low cost, have workable viscosities, exhibit good fire retardancy as measured by standardized test procedures and have relatively low smoke evolution during such testing.

Polyesters have extensive use with and without fillers and reinforcing materials. Fire retardancy is one of the important characteristics for many of such end uses. That has been achieved in the past by the inclusion in the polyester formulation of inorganic salts or halogenated organic materials as additives or as ingredients used in making the polyester.

Polyesters prepared using aliphatic polyols containing halogen have been generally unacceptable because of the instability resulting from dehydrohalogenation at relatively low temperatures.

Attempts have been made to overcome that instability problem by preparing polyesters using dibromoneopentyl glycol as the polyol according to FR—A—2,378,066. Those polyesters have shown excellent stability and fire retardancy in the standardized tests. However, they have suffered the disadvantages of high cost, a high viscosity and high smoke evolution.

Polyesters have also been prepared using dicyclopentadiene as an ingredient according to GB—A—968,910 and US—A—4,029,84. Those polyesters have been reported to be more reactive than most other polyesters. The cured products are also said to have higher heat distortion.

The present invention is directed to a process for preparing unsaturated polyesters by reacting an unsaturated dicarboxylic acid or anhydride, or a mixture of said acids or anhydrides with a polyol composed at least in part with dibromoneopentyl glycol wherein the catalyst employed is an aryl sulfonic acid and there is also present a sufficient amount of an acid scavenger to neutralize said sulfonic acid.

The polyesters are preferably prepared by the process wherein the acid or anhydride or a mixture of said acids or anhydrides and dicyclopentadiene are first reacted to substantial completion followed by reaction with the dibromoneopentyl glycol.

The unsaturated dicarboxylic acid or anhydride, or mixtures of said acids or anhydrides, useful herein may include any of those known in the unsaturated polyester art. Preferred examples are maleic or fumaric acids and maleic and/or phthalic anhydride, although citraconic, chloromaleic and others may have value in certain instances. A minor proportion of the unsaturated acid, up to about 25 mole percent, may be replaced by saturated dicarboxylic acids, examples of which are orthophthalic, isophthalic, succinic, adipic, sebacic and methylsuccinic. The unsaturated acid provides the unsaturation for curing the polyester resin. Therefore, the actual ratio of unsaturated acid to saturated acid will be dictated by the degree of cross-linking desired in the cured product. That degree of cross-linking may be predetermined by simple preliminary experiments as is standard in the polyester art.

The dicyclopentadiene optionally used in this invention may be a $C_{10}$ hydrocarbon concentrate, i.e. a commercial product generally prepared by dimerizing a crude $C_5$ stream from the cracking of crude mixtures of hydrocarbons as set forth by Gebhart et al. in U.S. Patent 3,557,239, issued January 19, 1971.

These concentrates have as the main reactive components about 60 to about 90 percent by weight of dicyclopentadiene, about 5 to about 30 percent by weight of the mixed Diels-Alder dimers of diolefins such as butadiene, cis- and trans-piperylene, isoprene, cyclopentadiene and methyl cyclopentadiene. The remainder of these concentrates generally comprise benzene, cyclopentene, 1,5-hexadiene and oligomers of the above diolefins.

Examples of some of the dimers which have been identified in these concentrates are the Diels-Alder adducts of two moles of isoprene (isoprene dimers), the adduct of cyclopentadiene and isoprene, and the adduct of cyclopentadiene and piperylene.

Relatively pure dicyclopentadiene (90—100 percent) can be employed and is preferred for use herein.

The second essential component of the polyester is dibromoneopentyl glycol, a commercial product. The use of dibromoneopentyl glycol for the entire amount of this component may provide a higher bromine content than is needed. Accordingly, a part of the glycol may be replaced by one or more polyols. Representative of such nonhalogenated polyols are ethylene glycol, 1,2-propanediol, diethylene glycol, dipropylene glycol, butanediol-1,3 and others well-known in the polyester art. When the total percentage of bromine desired in the polyester is known, it is an easy calculation to determine the ratio of pentaerythritol dibromide to nonhalogenated polyol that is to be used.

As is generally true in the polyester art, the ratios of the ingredients are such as to provide about equivalent amounts of dicarboxylic acid to the ester-forming ingredients. The dibromoneopentyl glycol should be used in an amount to provide up to 35 weight percent bromine in the polyester. To justify its use there should be enough present to provide at least 2.5 weight percent bromine and preferably it should be in a concentration to provide from 10 to 35 weight percent bromine.

The dicyclopentadiene if used at all, should be used in an amount of from about 0.05 to 0.5 equivalents per equivalent of the dicarboxylic acid.

Although the polyesters may be prepared by reacting all of the stated ingredients together initially or in any sequence, preferred results are obtained with a particular reaction sequence. In that preferred embodiment, the unsaturated acid anhydride is reacted in a nitrogen atmosphere with water.

The reaction is carried out in the presence of water in excess of that required to convert the acid anhydride to acid.

The reactants can be heated to a temperature range from about 30°C to about 150°C to complete the hydrolysis reaction.

The reaction mixture is then preferably blended with the $C_{10}$ hydrocarbon concentrate and heated to a temperature in the range from 90°C—120°C for a period of time from five minutes to one hour in order to effect the $C_{10}$ esterification reaction with the unsaturated dicarboxylic acid.

The Diels-Alder product does further react with the polyols in combination with the $C_{10}$ esters.

The last step of the process involves adding the dibromoneopentyl glycol and other polyol, if used, and heating the resin mixture to a temperature range from 140°C to 215°C for a period of time ranging from six to fourteen hours or until the polyester resin has an acid number of less than 100 and preferably less than 40.

A useful esterification catalyst to be employed in this last step is p-toluene sulfonic acid. When so used, the sulfonic acid should be neutralized after esterification is substantially complete. Neutralization is readily achieved by addition to the reaction product of a small amount of an oxirane compound. Typical of the useful compounds are the polyepoxides and preferred are the diglycidyl ethers of polyols, usually called epoxy resins.

The resin is then recovered and blended with an ethylenically unsaturated monomer copolymerizable with the unsaturated polyester polymers to form a blend wherein the weight ratio of polyester to monomer is in the range from about 4:1 to about 1:2. Such ethylenically unsaturated monomers are well-known and include styrene, chlorostyrene, vinyl toluene, divinyl benzene, dicyclopentadiene alkenoate, acrylic and methacrylic acid, diallyl phthalate or mixtures thereof.

These polyester blends with unsaturated monomers should contain about 20 to about 60 percent by weight and preferably 30—50 percent by weight of the monomers based on the weight of the polyester. A small amount of an inhibitor such as tertiary butyl catechol or hydroquinone may be added to this mixture.

The final blend is a cross-linkable polyester composition which is useful to make laminates, castings or coatings.

Laminates can be made by mixing into the crosslinkable composition, free radical-forming catalysts in known amounts and adding this mixture to a suitable fibrous reinforcement such as carbon fibers, fibrous glass or inorganic fibers.

Examples of these catalysts are benzoyl peroxide, tertiary butyl peroxide and methylethyl ketone peroxide. It is freqeuntly of value to add accelerators such as cobalt naphthenate or dimethyl aniline.

The polyester resin is rolled, sprayed or impregnated into the fibrous reinforcement such as fibrous glass and cured in a manner well-known in the art. When fibrous glass is used, it can be in any form such as chopped strands, filaments, glass ribbons, glass yarns or reinforcing mats.

The use of sulfuric acid and sulfonic acids as catalysts for polyesterification reactions using saturated dibasic acids are known in the prior art, e.g., P. J. Flory disclosed the use of p-toluene sulfonic acid (p-TSA) as a catalyst for the reaction of adipic acid and ethylene glycol in J. AM. Chem. Soc. Vol. 61, pp 3334—40 (1939). Later attempts to use strong acid catalysts in the preparation of unsaturated polyester resins have been less than successful. US patent 3,285,995 teaches some of the adverse reactions caused by the presence of sulfonic acids.

The Kirk/Othmer reference ("Encyclopedia of Chemical Technology", second edition, 20, pp 798—799 (1969) teaches that weakly acidic or basic catalysts are usually required for reactions involving aliphatic diols in order to prevent dehydration to ether or olefin. It has also been pointed out in this reference that acid catalysts such as sulfuric acid or p-TSA, while increasing the rate of both esterification and isomerization, usually cause color formation and other detrimental side reactions.

Some of these adverse reactions caused by the presence of sulfuric, or sulfonic acids, include premature gelation of the styrenated and unstyrenated resins and the loss of glycol from the cook due to the formation of volatile ethers. It has been shown that as little as 50 ppm of sulfuric acid will catalyze the formation of ethers from aliphatic diols at polyester reaction temperatures.

The acid scavenger to be used in the process is any compound that will neutralize or esterify the acid catalyst through formation of a salt, ester, amine salt or by other means. Typical of such scavengers are the oxirane compounds, such as epichlorohydrin, the diglycidyl ether of a polyol as, for example, the diglycidyl ether of an aliphatic glycol and other epoxy compounds; oxetane compounds such as bis-2,2-(dibromomethyl)oxetane; amines such as diethanolamine or triethanolamine; soluble salts of weak acids such as sodium acetate.

The esterification catalyst is an aryl sulfonic acid or an ester of such an acid. Typical of those acids are benzene sulfonic acid and p-toluene sulfonic acid. The amount of catalyst can vary between about 0.05 and 3 percent by weight of the reactants. Preferably, the amount is between 0.1 and 0.4 weight percent.

The polyester is made in generally conventional manner except as otherwise described herein. In one embodiment, the acid, dibromoneopentyl glycol and catalyst are introduced into a suitable esterification reaction vessel equipped with means for removing water of esterification suitably as it is formed in the reaction. The reactants are blanketed with an inert atmosphere, preferably nitrogen gas, then agitated and heated to effect the reaction for a desired period of time. The reaction temperature can range from about 100°C to 200°C, preferably from 135°C to 165°C. The exact reaction time will depend on the resin formulation, the amount of catalyst, the reaction temperature and pressure and the inert gas sparge rate.

The degree of reaction is conveniently determined by measuring the acid number or by measuring the amount of water liberated in the reaction. The reaction is discontinued when the product has a desired acid number, e.g., an acid number of 40 or below. After the reaction has been carried to the desired degree of completion, the acid scavenger is added.

In another embodiment, the dibromoneopentyl glycol is melted and the aryl sulfonic acid catalyst dissolved therein. While still molten, the acid scavenger may be added to neutralize the mixture by converting the acid to the corresponding ester. Such dissolved or dispersed esters are useful in causing esterification of the glycol and acid or anhydride. During the cook, the catalyst acid scavenger ester splits to form the acid which acts as a catalyst. Prior to styrenation of the resin solids, the resin is treated with a scavenger to remove strong noncarboxylic acids.

Alternatively, the aryl sulfonic acid and glycol can be mixed to form a physical blend which is useful as a premix for preparing glycol-carboxylic acid esters.

Preferably, a solid solution of catalytic amounts of up to 1 weight percent of an aryl sulfonic acid in dibromoneopentylglycol is used.

The following examples illustrate the invention.

Examples 1—4

There was loaded into a two-liter resin kettle equipped with an agitator, nitrogen purge and Dean-Stark trap, 294 gm (3.0 moles) of maleic anhydride and 80 gm (4.4 moles) of distilled water. That mixture was heated to 110°C for 20 minutes with water cooling on both condensers of the trap. Then there was added 346 gm (2.5 moles) of 95.4 percent dicyclopentadiene and held at 110°C for one hour and 25 minutes. To that was added 687.5 gm (~2.5 moles of a commercially available impure dibromoneopentyl glycol of M.W. 275) and 2.66 gm of p-toluene sulfonic acid. Steam was put on the bottom condenser of the trap and increased the nitrogen flow rate. The reaction mixture was heated to 150°C over the next two hours. After approximately five hours from the addition of the glycol, the acid number of the resin was reduced to 27.7. The resin was inhibited with 20 drops of a 25 percent solution of p-toluene hydroquinone in propylene glycol and thinned with 20 gm of a diglycidyl ether of a glycol having an epoxy equivalent weight of 175—205 and 700 gm of styrene.

In a similar manner, Examples 2, 3 and 4 were run, Example 2 being for comparison. The recipes and properties of the thinned resins are as follows:

| Example | 1 | 2 | 3 | 4 |
|---|---|---|---|---|
| Moles maleic anhydride | 3.0 | 3.0 | 3.0 | 3.0 |
| Moles water | 4.4 | 4.4 | 4.4 | 4.4 |
| Moles dicyclopentadiene | 2.5 | 1.5 | 1.5 | 1.5 |
| Moles dibromoneopentyl glycol | 2.5 | 0.0 | 0.75 | 2.0 |
| Moles ethylene glycol | 0.0 | 3.0 | 2.25 | 1.0 |
| Grams p-TSA | 2.67 | 1.4 | 1.7 | 2.2 |
| Grams styrene | 700. | 346. | * | 575. |
| Grams diglycidyl ether | 20. | 10. | * | 16.4 |
| Acid No. | 27.7 | 28.7 | 29.1 | 28.1 |
| Viscosity (Pa.s) | 0.274 | 0.106 | 0.098 | 0.166 |
| Color (Gardner) | 2.0 | 2.6 | 2.0 | 2.0 |
| SPI gel data | | | | |
| Gel Time (min.) | 5.6 | 9.2 | 9.0 | 5.9 |
| Cure Time (min.) | 8.4 | 8.5 | 12.5 | 8.5 |
| Peak exotherm (°C) | 211. | 169. | 203. | 223. |
| % Bromine | 20.6 | 0 | 9.95 | 19.8 |

*465 grams resin thinned with 250.4 grams styrene and 7.1 grams diglycidyl ether.

4

**0 032 189**

Test specimens were prepared from the resins of Examples 2, 3 and 4. Castings were made by mixing in 1 weight percent benzoyl peroxide and the formulations cast into test bars 1/8 inch (3.2 mm) thick. The castings were cured to a solid and then post-cured for 24 hours at 105°C.

Three ply laminates were prepared from 3 layers of 42.5 g chopped glass mat. The laminates were cured with 0.5 weight percent of 6 percent cobalt naphthenate and 1.0 weight percent of methylethyl ketone peroxide. The laminates were allowed to remain at room temperature for one week and were given no elevated temperature postcure.

The results are shown in the following table:

| | Resin of example | | |
|---|---|---|---|
| 1/8″ (3.2 mm) clear casting | 2 | 3 | 4 |
| Flexural Strength, psi ($10^5 \cdot$ Pa) | 13,400 (927) | 9,800 (677) | 11,800 (819) |
| Flexural Modulus, psi ($10^5 \cdot$ Pa) | 354,000 (24517) | 443,000 (30794) | 496,000 (34324) |
| Tensile Strength, psi ($10^5 \cdot$ Pa) | 4,500 (312) | 5,300 (367) | 3,800 (263) |
| % Elongation | 1.5 | 1.2 | 1.0 |
| ASTM Heat Distortion (°C) | — | 71 | 101 |
| % Wt Change (48 hrs) DI Water @25°C DI Water @200°C | +.19 −1.91 | +.01 +1.73 | +.06 +2.48 |
| 3-Ply laminate Flexural Strength, psi ($10^5 \cdot$ Pa) | 24,000 (1647) | 23,900 (1638) | 20,800 (1442) |
| Flexural Modulus, psi ($10^5 \cdot$ Pa) | 829,000 (57371) | 873,000 (60313) | 886,000 (61196) |
| Tensile Strength, psi ($10^5 \cdot$ Pa) | 15,200 (1049) | 15,000 (1039) | 11,000 (735) |
| % Elongation | 1.8 | 1.7 | 1.2 |
| % 60° Gloss Retention* | 85 | 97 | 101 |
| Change Yellowness Index* | −13.1 | −15 | −7.8 |

*1000 hr in weatherometer for sample with 1% commercial light stabilizer.

Similiar results are seen when the dibromoneopentyl glycol is employed as the sole glycol.

Comparative Example 5

The laboratory cooks were carried out in a 2-liter resin flask, equipped with a mechanical stirrer, a stainless steel $N_2$ sparge tube, a stainless steel thermowell, and a steam heated (100°C) partial condenser followed by a Dean-Stark tube followed by a water cooled condenser. The reaction heat source was two 275 watt infrared lamps and the whole resin flask was kept in a hot air oven.

The resin flask was charged with 800 gm (3.05 moles) of commercial dibromoneopentyl glycol, 170 gm (1.73 moles) of maleic anhydride, 110 gm (0.74 mole) of phthalic anhydride and 80 gm (4.44 moles) of water.

The reactor was sparged with $N_2$ (1190 cc/min) to remove air from the system prior to the start of the reaction and to aid in the removal of water after the reaction was started. [For comparative purposes, the cook time is considered to be that part of the cycle from the time the reaction temperature reached 125°C until the reaction was terminated].

The temperature controller was set at 135°C and the reaction started. The reaction reached 125°C in about 45 minutes and 135°C in 55 minutes. The reaction temperature was maintained at 135°C until the acid number reached 29. (The usual acid number for making polyesters is 30±2.) The cook time was 22 hours.

The crude alkyd was poured into a polytetrafluoroethylene coated pan and allowed to cool.

5

Samples were made up for testing by dissolving 75 gm of alkyd in 25 gm of styrene, containing 0.02 gm of toluhydroquinone. The styrenated resin had the following properties:

| | |
|---|---|
| Gardner Color | 8.7 |
| SPI Gel Time | 5.1 min. |
| SPI Peak Time | 6.9 min. |
| SPI Peak Exotherm | 188°C |

To a sample of this styrenated resin was added 1 weight percent epichlorohydrin to bleach the color caused by dissolved iron bromide. The bleached sample had the following properties:

| | |
|---|---|
| Gardner Color | 3.9 |
| SPI Gel Time | 6.1 min. |
| SPI Peak Time | 8.1 min. |
| SPI Peak Exotherm | 213°C |

Example 6

The above procedure was repeated except that 2.1 gm (0.011 mole) of p-toluene sulfonic acid was added to the reactor along with the charge. The reaction required 5.0 hours to reach an acid number of 30. Samples of styrenated resin were made up as in Example 5 and the following results were obtained:

| | Without epichlorohydrin | With epichlorohydrin |
|---|---|---|
| Gardner Color | 2.4 | 2.4 |
| SPI Gel Time | 1.6 min. | 6.6 min. |
| SPI Cure Time | 2.7 min. | 8.8 min. |
| SPI Peak Exotherm | 133°C | 209°C |

Example 7

p-Toluene sulfonic acid (TSA), 3.6 gm, was added to 1200 gm of molten (110°C) dibromoneopentyl glycol prepared as described in U.S. Patent 3,932,541 prior to neutralization with an oxirane. To the molten solution was added 23 gm of a commercial polyglycol diepoxide having an epoxide equivalent weight of 175—205 to neutralize the solution and to convert any residual hydrogen bromide or TSA to their corresponding esters. The molten mixture was then allowed to solidify and crushed.

The DBNPG-TSA mixture was converted to an unsaturated polyester resin according to the procedure of Example 5, except as noted below.

A mixture of maleic (192 gm. 1.96 moles) and phthalic anhydride (295 gm, 1.99 moles) were premelted and heated to 140°C. The solid DBNPG-TSA (1048 gm, 4.0 moles) was added to the molten anhydrides as rapidly as possible. During the addition, the reactor temperature fell to ~75°C. The mixture was then heated rapidly to 160°C and maintained there until the acid number reached approximately 37. The reaction time, as measured from the time the reaction temperature reached 160°C, was 7 hours.

The crude alkyd was poured into a pan coated with polytetrafluoroethylene and allowed to cool.

Samples were made up for testing by dissolving 75 gm of alkyd in 25 gm of styrene, containing 0.02 gm of toluhydroquinone. The styrenated resin (25 percent styrene) had the following properties:

| | Without epichlorohydrin | With epichlorohydrin |
|---|---|---|
| Gardner Color | >4 | 4 |
| Gardner Viscosity | >Z-6 | Z-5$\frac{1}{2}$ |
| SPI Gel Time (min.) | 2.2 | 4.1 |
| SPI Cure Time (min.) | 3.3 | 5.6 |
| SPI Peak Exotherm (°C) | 176 | 213 |

# 0 032 189

**Claims**

1. A process for preparing unsaturated polyesters by reacting an unsaturated dicarboxylic acid or anhydride or a mixture of said acids or anhydrides with a polyol composed at least in part with dibromoneopentyl glycol wherein the catalyst employed is an aryl sulfonic acid and there is also present a sufficient amount of an acid scavenger to neutralize or esterify said sulfonic acid.

2. The process of claim 1 wherein said acid scavenger is an oxirane compound.

3. The process of claim 2 wherein said oxirane compound is a glycidyl ether.

4. The process of claim 3 wherein said glycidyl ether is a diglycidyl ether of a polyol.

5. The process of claim 2 wherein said oxirane compound is epichlorohydrin.

6. The process of claim 1 wherein said aryl sulfonic acid is p-toluene sulfonic acid.

7. The process of any of claims 1 to 6 wherein dicyclopentadiene is also present for reaction with said unsaturated dicarboxylic acid.

8. A composition, useful in the process of claim 1 for making unsaturated polyesters by reaction with an unsaturated dicarboxylic acid or anhydride or a mixture of said acids or anhydrides, in the presence of an acid scavenger, present in an amount sufficient to neutralize or esterify an aryl sulfonic acid catalyst, which comprises a solid solution of catalytic amounts of up to 1 weight percent of an aryl sulfonic acid in dibromoneopentyl glycol.

9. The composition of claim 8 wherein the aryl sulfonic acid and any residual hydrogen bromide is neutralized with an acid scavenger.

10. The composition of claim 9 wherein said acid scavenger is an oxirane compound.

11. The composition of claim 10 wherein said oxirane compound is a glycidyl ether.

12. The composition of claim 10 wherein said oxirane compound is epichlorohydrin.

13. The composition of claim 8 wherein said aryl suflonic acid is p-toluene sulfonic acid.

14. The composition of any of claims 8 to 13 wherein dicyclopentadiene is also present for reaction with said polycarboxylic acid.


**Patentansprüche**

1. Ein Verfahren zur Herstellung von ungesättigten Polyestern durch die Umsetzung einer ungesättigten Dicarbonsäure oder Anhydrid oder eines Gemisches aus den genannten Säuren oder Anhydriden mit einem Polyol bestehend mindestens zum Teil aus Dibromoneopentylglycol wobei der verwendete Katalysator eine Arylsulfonsäure ist und ebenfalls eine ausreichende Menge Säurebindner vorhanden ist um die genannte Sulfonsäure zu neutralisieren oder zu verestern.

2. Das Verfahren nach dem Anspruch 1, wobei der genannte Säurebindner eine Oxiranverbindung ist.

3. Das Verfahren nach dem Anspruch 2, wobei die genannte Oxiranverbindung ein Glycidyläther ist.

4. Das Verfahren nach dem Anspruch 3, wobei der genannte Glycidyläther ein Diglycidyläther eines Polyols ist.

5. Das Verfahren nach dem Anspruch 2, wobei die genannte Oxiranverbindung Epichlorohydrin ist.

6. Das Verfahren nach dem Anspruch 1, wobei die genannte Arylsulfonsäure p-Toluolsulfonsäure ist.

7. Das Verfahren nach einem der Ansprüche 1 bis 6, wobei Dicyclopentadien für eine Reaktion mit der genannten ungesättigten Dicarbonsäure ebenfalls vorhanden ist.

8. Eine Zusammensetzung, nützlich im Verfahren nach dem Anspruch 1 zur Herstellung von ungesättigten Polyestern durch die Reaktion ungesättigter Dicarbonsäuren oder Anhydriden oder eines Gemisches aus den genannten Säuren oder Anhydriden, in Anwesenheit eines Säurebindners, vorhanden in ausreichender Menge um den Arylsulfonsäurekatalysator zu neutralisieren oder zu verestern, welche eine feste Lösung von katalytischen Mengen von bis zu 1 Gewichtsprozent der Arylsulfonsäure in Dibromoneopentylglycol beinhaltet.

9. Die Zusammensetzung nach dem Anspruch 8, wobei die Arylsulfonsäure und das ganze restliche Bromwasserstoff mit dem Säurebindner neutralisiert werden.

10. Die Zusammensetzung nach dem Anspruch 9, wobei der genannte Säurebindner eine Oxiranverbindung ist.

11. Die Zusammensetzung nach dem Anspruch 10, wobei die genannte Oxiranverbindung ein Glycidyläther ist.

12. Die Zusammensetzung nach dem Anspruch 10, wobei die genannte Oxiranverbindung Epichlorohydrin ist.

13. Die Zusammensetzung nach dem Anspruch 8, wobei die genannte Arylsulfonsäure p-Toluolsulfonsäure ist.

14. Die Zusammensetzung nach einem der Ansprüche 8 bis 13, wobei Dicyclopentadien für eine Reaktion mit der genannten Polycarbonsäure ebenfalls vorhanden ist.


**Revendications**

1. Procédé de préparation de polyesters insaturés par réaction d'un acide ou anhydride dicarboxylique insaturé ou d'un mélange desdits acides ou anhydrides avec un polyol composé au moins en partie de

7

**0 032 189**

dibromonéopentylglycol, procédé dans lequel le catalyseur utilisé est un acide arylsulfonique et on opère également en présence d'une quantité suffisante d'un agent captant les acides pour neutraliser ou estérifier ledit acide sulfonique.

2. Procédé selon la revendication 1, dans lequel ledit agent captant les acides est un composé d'oxiranne.

3. Procédé selon la revendication 2, dans lequel ledit composé d'oxiranne est un éther glycidylique.

4. Procédé selon la revendication 3, dans lequel ledit éther glycidylique est un éther diglycidylique d'un polyol.

5. Procédé selon la revendication 2, dans lequel ledit composé d'oxiranne est l'épichlorhydrine.

6. Procédé selon la revendication 1, dans lequel ledit acide acrylsulfonique est l'acide p-toluènesulfonique.

7. Procédé selon l'une quelconque des revendications 1 à 6, dans lequel du dicyclopentadiène est également présent pour réagir avec ledit acide dicarboxylique insaturé.

8. Composition utilisable dans le procédé de la revendication 1 pour préparer des polyesters insaturés par réaction avec un acide ou un anhydride dicarboxylique insaturé ou un mélange desdits acides ou anhydrides, en présence d'un agent captant les acides, présent en une quantité suffisante pour neutraliser ou estérifier un catalyseur du type acide arylsulfonique, composition qui comprend une solution solide de quantités catalytiques allant jusqu'à 1% en poids d'un acide arylsulfonique dans le dibromonéopentylglycol.

9. Composition selon la revendication 8, dans laquelle l'acide arylsulfonique et tout acide bromhydrique résiduel sont neutralisés avec un agent captant les acides.

10. Composition selon la revendication 9, dans laquelle ledit agent captant les acides est un composé d'oxiranne.

11. Composition selon la revendication 10, dans laquelle ledit composé d'oxiranne est un éther glycidylique.

12. Composition selon la revendication 10, dans laquelle ledit composé d'oxiranne est l'épichlorhydrine.

13. Composition selon la revendication 8, dans laquelle ledit acide arylsulfonique est l'acide p-toluènesulfonique.

14. Composition selon l'une quelconque des revendications 8 à 13, dans laquelle est également présent du dicyclopentadiène pour réagir avec ledit acide polycarboxylique.